# EUROPEAN PATENT SPECIFICATION

(11) **EP 3 029 008 B1**
(45) Date of publication and mention of the grant of the patent: **17.06.2020**
(21) Application number: 14831783.7
(22) Date of filing: 30.07.2014
(51) Int. Cl.: C04B 35/591, C04B 35/584

(54) **SILICON NITRIDE-BASED SINTERED BODY, AND CORROSION-RESISTANT MEMBER, SLIDING MEMBER AND MEMBER FOR PAPER-MAKING MACHINE EACH MANUFACTURED USING THE SAME**
SINTERKÖRPER AUF DER BASIS VON SILICIUMNITRID UND DAMIT HERGESTELLTES KORROSIONSBESTÄNDIGES BAUTEIL, GLEITELEMENT UND ELEMENT FÜR EINE PAPIERHERSTELLUNGSMASCHINE
CORPS FRITTÉ À BASE DE NITRURE DE SILICIUM, ET ÉLÉMENT RÉSISTANT À LA CORROSION, ÉLÉMENT COULISSANT ET ÉLÉMENT POUR MACHINE À PAPIER FABRIQUÉS CHACUN À L'AIDE DE CELUI-CI

(30) Priority: 31.07.2013 JP 2013158979
(43) Date of publication of application: 08.06.2016
(73) Proprietor: Kyocera Corporation, Kyoto-shi, Kyoto 612-8501 (JP)
(72) Inventor: HIRANO, Yoshinori, Kyoto-shi Kyoto 612-8501 (JP); OOTA, Mizuho, Kyoto-shi Kyoto 612-8501 (JP); ODA, Takehiro, Kyoto-shi Kyoto 612-8501 (JP)
(74) Representative: Viering, Jentschura & Partner mbB Patent- und Rechtsanwälte
(86) International application number: PCT/JP2014/070088
(87) International publication number: WO 2015/016269

(56) References cited:
- EP-A1- 3 006 420
- WO-A1-2005/019133
- JP-A- S6 259 572
- JP-A- S59 146 983
- JP-B2- H0 537 944
- YU F KARGIN ET AL: "Hot-pressed SiNceramics containing CaO-AlO-AlN modifying additives", INORGANIC MATERIALS, NAUKA/INTERPERIODICA, MO, vol. 48, no. 11, 9 October 2012 (2012-10-09), pages 1158-1163, XP035122548, ISSN: 1608-3172, DOI: 10.1134/S0020168512110039
- YA-WEN LI ET AL: "Nonepitaxial heterogeneous nucleation of [alpha]-sialon in the Ca-doped system", JOURNAL OF MATERIALS RESEARCH, vol. 16, no. 02, 1 February 2001 (2001-02-01), pages 578-582, XP055347615, US ISSN: 0884-2914, DOI: 10.1557/JMR.2001.0083
- Xinwen Zhu ET AL: "Texturing Ca-alpha-Sialon via strong magnetic field alignment", Journal of the Ceramic Society of Japan, 1 January 2007 (2007-01-01), pages 701-705, XP055347630, Retrieved from the Internet: URL:https://www.jstage.jst.go.jp/article/j cersj2/115/1347/115_1347_701/_pdf
- JIN SHENGLI ET AL: "Sintering properties and reaction process of Si3N4-Al2O3-CaO composite in coke bed at high temperatures", NAIHUO CAILIAO - REFRACTORIES, GAI KAN BIANJIBU, LUOYANG, CN, vol. 37, no. 3, 1 January 2003 (2003-01-01), pages 128-132, XP008183380, ISSN: 1001-1935

## Description

### Technical Field

The present invention relates to a silicon nitride sintered body, and a corrosion-resistant member, a sliding member, and a member for a papermaking machine using the silicon nitride sintered body.

### Background Art

Silicon nitride sintered bodies have nowadays been used for various industrial members, including engine components, members for molten metal, cutting tools, members for fast reactors, and abrasion-resistant members.

As an example of application of such a silicon nitride sintered body, in Patent Literature 1, there is proposed a spark plug for internal-combustion engine made of a sintered body which is predominantly composed of silicon nitride, and also contains calcium oxide in an amount of 2 to 15 wt%, magnesium oxide in an amount of 0.01 to 10 wt%, and aluminum oxide in an amount of 0 to 15 wt% on an oxide basis. EP3006420 discloses the making of a ceramic sintered anti-corrosion member. The crystal grain boundary can contain calcium silicate.

YU F KARGIN ET AL: "Hot-pressed Si3N4 ceramics containing CaO-Al2O3-AlN modifying additives",INORGANIC MATERIALS, NAUKA/ INTERPERIODICA, MO, vol. 48, no. 11, 9 October 2012 (2012-10-09), pages 1158-1163, shows a silicon nitride sintered ceramic containing Ca-sialon intergranular phase.

### Citation List

### Patent Literature

Patent Literature 1: Japanese Unexamined Patent Publication JP-A 5-36464 (1993)

### Summary of Invention

### Technical Problem

Such a silicon nitride sintered body may incur decreases in mechanical strength and fracture toughness when used in a corrosive environment. Thus, there is a demand for a silicon nitride sintered body which is less prone to corrosion in a corrosive environment, and affords improved mechanical characteristics even if it is subjected to a corrosive environment.

The invention has been devised to solve the problem as mentioned above, and accordingly an object of the invention is to provide a silicon nitride sintered body which is less prone to corrosion in a corrosive environment and affords improved mechanical characteristics even if it is subjected to a corrosive environment, and a corrosion-resistant member, a sliding member, and a member for a papermaking machine that utilize the silicon nitride sintered body.

### Solution to Problem

The present invention provides a silicon nitride sintered body according to claim 1, a corrosion-resistant member according to claim 6, a sliding member according to claim 7, a member for a papermaking machine according to claim 8, and use of the silicon nitride sintered body according to claim 9. Further embodiments of the present invention are described in the dependent claims.

### Advantageous Effects of Invention

According to the invention, the silicon nitride sintered body is less prone to corrosion in a corrosive environment, and affords improved mechanical characteristics even if it is subjected to a corrosive environment.

Moreover, according to the invention, the corrosion-resistant member, the sliding member, and the member for a papermaking machine afford high reliability in a corrosive environment.

### Description of Embodiments

A silicon nitride sintered body according to the present embodiment contains silicon nitride as a main crystal phase, and also has crystals of oxynitrides including calcium, aluminum, and silicon (hereafter also referred to simply as "oxynitride crystals") in a grain boundary phase which is lying between silicon nitride crystals, calcium, the aluminum and the silicon constituting the crystals of oxynitrides consisting of 1.3 to 32.0 mass% calcium, 0.1 to 25.0 mass% aluminum, and a balance silicon.

As used herein, "the main crystal phase" refers to that part of crystals constituting the silicon nitride sintered body which is present in the highest proportion. In an X-ray diffraction chart plotted by X-ray diffractometer (XRD), silicon nitride defined as the main crystal phase exhibits the highest peak (has a large diffraction intensity value). Moreover, "the grain boundary phase" refers to a phase present in between the crystals of silicon nitride constituting the main crystal phase in the silicon nitride sintered body. Other crystals than silicon nitride crystals and an amorphous phase are present in the grain boundary phase. In addition, the above-mentioned oxynitride crystals refer to crystals in which nitrogen is substituted in part for oxygen in the crystals of oxides including calcium, aluminum, and silicon.

In the oxynitride crystals in which nitrogen is substituted in part for oxygen in the crystals of oxides including calcium, aluminum, and silicon, close covalent bonds occur between the individual elements constituting the oxynitride crystals, wherefore the bonding strength between the individual elements is high. Thus, the silicon nitride sintered body according to the present embodiment, having the oxynitride crystals in the grain boundary phase, is less prone to corrosion in a corrosive environment.

Moreover, when the mass proportions of calcium, aluminum, and silicon constituting the oxynitride crystals fall in their respective prescribed ranges, then the silicon nitride sintered body affords improved mechanical characteristics even if it is subjected to a corrosive environment. More specifically, high mechanical strength and high fracture toughness can be attained.

If the mass proportion of calcium is less than 1.3% or the mass proportion of aluminum is less than 0.1%, the levels of mechanical strength and fracture toughness will be lowered. Moreover, if the mass proportion of calcium is greater than 32.0%, the level of mechanical strength will be lowered. Furthermore, if the mass proportion of aluminum is greater than 25.0%, in addition to the level of mechanical strength, the level of thermal conductivity will be lowered.

The oxynitride crystals refer to oxynitride crystals in which the first peak appears at a diffraction angle 2θ ranging from 30.4° to 32.4° and the second peak appears at a diffraction angle 2θ ranging from 51.0° to 53.0° in an X-ray diffraction chart.

The oxynitride crystals in which the first peak appears at a diffraction angle 2θ ranging from 30.4° to 32.4° and the second peak appears at a diffraction angle 2θ ranging from 51.0° to 53.0° can be expressed in compositional formula form as: Caₓ(Al₂-_{y}Si_{1+y}) (O_{7-y}N_{y}) (wherein the following relationships hold: 0.032 ≤ x ≤ 1.3, and 1.073 ≤ y ≤ 1.996), for example. Moreover, the oxynitride crystals in which both of the first peak and the second peak appear at a diffraction angle 2θ ranging from 27.0° to 29.0° can be expressed in compositional formula form as: Caₓ(Al_{2-y}Si_{2+y}) (O_{8-y}N_{y}) (wherein the following relationships hold: 0.032 ≤ x ≤ 1.3, and 1.073 ≤ y ≤ 1.996), for example.

The following describes a method to check the presence or absence of oxynitride crystals and a method to calculate the mass proportion of each of calcium, aluminum, and silicon constituting the oxynitride crystals.

First, other crystals than silicon nitride crystals present in the silicon nitride sintered body is identified with reference to an X-ray diffraction chart plotted by XRD. Next, the presence of crystals other than silicon nitride in the grain boundary phase is checked, and elements constituting the crystals are examined by transmission electron microscope (TEM) equipped with energy dispersive X-ray spectrometer (EDS) or wavelength dispersive X-ray spectrometer (WDS), and also the content of each element is determined.

More specifically, first, the presence of crystals other than silicon nitride is checked with reference to an X-ray diffraction chart plotted by XRD, and whether or not the crystals are of crystals of oxides including calcium, aluminum, and silicon is determined. Next, the presence or absence of crystals in the grain boundary phase of the silicon nitride sintered body is checked by means of TEM. Then, whether or not elements constituting the crystals present in the grain boundary phase are calcium, aluminum, silicon, oxygen, and nitrogen is determined by means of EDS or WDS incorporated in the TEM, and finally, whether or not the content of each element falls in the prescribed range is determined.

The oxynitride crystals are of the type in which the first peak appears at a diffraction angle 2θ ranging from 30.4° to 32.4° and the second peak appears at a diffraction angle 2θ ranging from 51.0° to 53.0° in an X-ray diffraction chart. The oxynitride crystals of the type that exhibits such peaks are higher in covalent bonding capability than oxynitride crystals exhibiting different peaks, wherefore the use of the former oxynitride crystals helps increase the mechanical strength of the silicon nitride sintered body.

Moreover, the half-value width of the first peak that appears at a diffraction angle 2θ ranging from 30.4° to 32.4° is greater than or equal to 0.1° but less than or equal to 0.9°. When the half-value width of the first peak is greater than or equal to 0.1° but less than or equal to 0.9°, then the crystal planes extend widely, the crystallizability is high, and the oxynitride crystals are fine and incur little strain, wherefore high wear and abrasion resistance, high thermal conductivity, and high rigidity can be attained. It is particularly preferable that the half-value width of the first peak is greater than or equal to 0.15° but less than or equal to 0.3°. As used herein, "the half-value width of the first peak in an X-ray diffraction chart" refers to the range of diffraction intensity at a height equal to one-half of the height of the first peak with respect to the background as the reference.

Moreover, according to the present invention the content of oxynitride crystals falls in the range of 1 to 10 mass% based on the total mass of crystals constituting the silicon nitride sintered body defined as 100 mass%. When the content of oxynitride crystals falls within the prescribed range, the oxynitride crystals constitute a higher percentage of the grain boundary phase by area, thus achieving a further increase in mechanical strength. The content of oxynitride crystals is calculated by performing quantification on data obtained by XRD in accordance with Rietvelt analytical method.

Moreover, it is preferable that the silicon nitride sintered body of the present embodiment includes, in the grain boundary phase, compounds which contain iron and silicon and have an equivalent circle diameter greater than or equal to 0.05 µm but less than or equal to 5 µm, and that the number of the compounds is greater than or equal to 2.0 × 10⁴ but less than or equal to 2.0 × 10⁵ per 1 mm².

When the number of the compounds which contain iron and silicon and have an equivalent circle diameter greater than or equal to 0.05 µm but less than or equal to 5 µm is greater than or equal to 2.0 × 10⁴ but less than or equal to 2.0 × 10⁵ per 1 mm², since such a compound containing iron and silicon is a thermodynamically stable compound, it is possible to afford high oxidation resistance, and high thermal shock resistance as well.

As used herein, "the compound containing iron and silicon" refers to a compound composed of iron and silicon, or a compound composed of iron, silicon, and at least one of substances selected from among oxygen, tungsten, aluminum, magnesium, calcium, sodium, and potassium.

Examples of the compound composed of iron and silicon include compounds that are expressed in compositional formula form as: FeSi₃, FeSi₂, FeSi, Fe₂Si₃, Fe₃Si, Fe₃Si₂, Fe₃Si₄, Fe₃Si₇, Fe₅Si₂, and Fe₅Si₃, respectively.

The presence of the compound containing iron and silicon in the grain boundary phase may be examined by identification using XRD or by means of TEM equipped with EDS or WDS. Alternatively, the presence of the compound containing iron and silicon in the grain boundary phase may be determined by checking the presence of silicon in an iron-bearing part of the grain boundary phase by means of color mapping using electron-beam microanalyzer (EPMA) in combination with SEM (scanning electron microscope) observation.

Moreover, the compound containing iron and silicon differs in color tone from other compounds (crystals), wherefore the number of the compounds which have an equivalent circle diameter greater than or equal to 0.05 µm but less than or equal to 5 µm per 1 mm² can be determined by the following procedure. First, the range of analysis at an area of 10.8 × 10⁴ µm² (127 µm in transverse length and 85.3 µm in longitudinal length) under SEM of a magnification of 1000 times is set, and then an image of this area is captured by a CCD camera. Then, this image is analyzed by a method known as particle analysis using image analysis software "AZO-KUN" (trademark) manufactured by Asahi Kasei Engineering Corporation. As the conditions to be fulfilled in this analysis, the lightness level is set to BRIGHT, binarization is set to MANUAL, and a threshold value which is a measure of the contrast of the image is set to be greater than or equal to 0.8 time but less than or equal to 2 times the value of a peak in a histogram indicative of the brightness of each point (pixel) in the image. An optical microscope may be used instead of SEM.

Moreover, it is preferable that the silicon nitride sintered body of the present embodiment contains one or more oxides of rare-earth metal in the grain boundary phase, and that the total content of the rare-earth metal on an oxide basis is greater than or equal to 0.1 mass% but less than or equal to 1.0 mass% based on the total mass of all the constituents of the silicon nitride sintered body defined as 100 mass%. Fulfillment of such a condition makes it possible to increase the mechanical strength of the silicon nitride sintered body.

Moreover, it is preferable that the silicon nitride sintered body of the present embodiment contains an oxide of magnesium in the grain boundary phase, and that the content of magnesium on an oxide basis is greater than or equal to 0.1 mass% but less than or equal to 6.0 mass% based on the total mass of all the constituents of the silicon nitride sintered body defined as 100 mass%.

Fulfillment of such a condition makes it possible to enhance the fracture toughness of the silicon nitride sintered body by virtue of the presence of magnesium oxide in the grain boundary phase, as well as to increase the mechanical strength of the silicon nitride sintered body by virtue of the presence of densely-formed main crystal phase.

Moreover, it is preferable that the silicon nitride sintered body of the present embodiment contains an oxide of sodium in the grain boundary phase, and that the content of sodium on an oxide basis is greater than or equal to 0.2 mass% but less than or equal to 1.0 mass% based on the total mass of all the constituents of the silicon nitride sintered body defined as 100 mass%.

Fulfillment of such a condition makes it possible to enhance the resistance of the silicon nitride sintered body to corrosion by alkali, as well as to afford higher mechanical strength and higher fracture toughness in a corrosive environment, by virtue of the presence of sodium oxide which is highly resistant to corrosion by alkali.

The content of each of rare-earth metal, magnesium, and sodium on an oxide basis based on the total mass of all the constituents of the silicon nitride sintered body defined as 100 mass% is determined by measurement using ICP (Inductively Coupled Plasma) emission spectrophotometer. Moreover, the presence or absence of oxides of rare-earth metal, magnesium, and sodium in the grain boundary phase is examined by means of color mapping using TEM or EPMA.

Moreover, it is preferable that the silicon nitride sintered body of the present embodiment contains magnesium aluminate in the grain boundary phase. When magnesium aluminate is contained in the grain boundary phase, since magnesium aluminate is higher in resistance to corrosion by alkali than silicon nitride constituting the main crystal phase, it is possible to achieve further enhancement in resistance to corrosion by alkali.

A corrosion-resistant member according to the present embodiment, comprising the silicon nitride sintered body of the present embodiment, is less prone to corrosion in a corrosive environment and exhibits high mechanical strength and high fracture toughness even if it is subjected to a corrosive environment, and thus affords high reliability in a corrosive environment. The corrosion-resistant member is particularly desirable for use as a member which is exposed to an alkaline component such for example as a component containing sodium or potassium.

Examples of the member which is exposed to a component containing sodium or potassium include: a member for fast reactor that utilizes liquid sodium or liquid potassium as a coolant; a heater tube which is used in molten metal containing alkali metal salt; and a fishing line guide member that is exposed to alkaline sea water.

A sliding member and a member for a papermaking machine according to the present embodiment, comprising the silicon nitride sintered body of the present embodiment, produce the same effects as achieved by the corrosion-resistant member, and thus afford high reliability. Examples of the sliding member include a sealing ring, a rolling element for bearing, and a member for rotary compressor (vane, roller, and cylinder, for example). Examples of the member for a papermaking machine include foil for paper machine and an abrasion-resistant liner.

The following describes a method of manufacturing the silicon nitride sintered body of the present embodiment.

First, powder of metallic silicon and powder of silicon nitride having a β-phase transition rate of less than or equal to 20% are prepared, and these powders are mixed so that the mass ratio between them, expressed as: (metallic silicon powder)/(silicon nitride powder), is greater than or equal to 1 but less than or equal to 10 to obtain a powder mixture.

The reason for the use of the silicon nitride powder having a β-phase transition rate of less than or equal to 20% is to achieve an enhancement in mechanical strength and fracture toughness. The use of silicon nitride powder having a β-phase transition rate of less than or equal to 10% is particularly desirable.

Next, calcium carbonate powder and aluminum oxide powder are prepared as sintering aids, and magnesium aluminate powder is prepared as an additive.

In the present embodiment, silicon nitride is obtained from metallic silicon powder through a nitriding process. At this time, an increase in mass takes place due to metallic silicon nitrization, which results in a difference in mass proportion between raw material powder and a resultant silicon nitride sintered body. Thus, a proper amount of each powder is weighed out in consideration of an increase of the mass of metallic silicon in the nitriding process.

For example, let it be assumed that the content of a powder mixture of metallic silicon powder and silicon nitride powder (mass ratio: 5.4) is 88 mass%, the content of calcium carbonate powder used as a sintering aid is 6.4 mass%, the content of aluminum oxide powder used as a sintering aid is 3.1 mass%, and the content of magnesium aluminate powder used as an additive is 2.5 mass% based on the total mass of the raw material powder defined as 100 mass%. In this case, in a produced silicon nitride sintered body, based on the total mass of all the constituents of the silicon nitride sintered body defined as 100 mass%, calcium is contained in an amount of 3.9 mass% on an oxide basis, aluminum is contained in an amount of 2.7 mass% on an oxide basis, magnesium is contained in an amount of 2.1 mass% on an oxide basis, and the rest, excluding inevitable impurities, is silicon nitride.

Moreover, in order to obtain a silicon nitride sintered body which has a rare-earth metal oxide content in the grain boundary phase and in which the total content of the rare-earth metal on an oxide basis is greater than or equal to 0.1 mass% but less than or equal to 1.0 mass% based on the total mass of all the constituents of the silicon nitride sintered body defined as 100 mass%, it is advisable that a proper amount of rare-earth metal oxide powder is weighed out for use as raw material powder, with consideration given to an increase of the mass of metallic silicon in the nitriding process.

Moreover, in order to obtain a silicon nitride sintered body which has a magnesium oxide content in the grain boundary phase and in which the content of magnesium on an oxide basis is greater than or equal to 0.1 mass% but less than or equal to 6.0 mass% based on the total mass of all the constituents of the silicon nitride sintered body defined as 100 mass%, for example, in the case of using magnesium oxide powder, a proper amount of the magnesium oxide powder is weighed out for use as raw material powder, with consideration given to an increase of the mass of metallic silicon in the nitriding process. In the case of using magnesium aluminate powder, the amount of the magnesium aluminate powder is adjusted in consideration of the mass proportion of magnesium in magnesium aluminate.

Moreover, in order to obtain a silicon nitride sintered body which has a sodium oxide content in the grain boundary phase and in which the content of sodium on an oxide basis is greater than or equal to 0.2 mass% but less than or equal to 1.0 mass% based on the total mass of all the constituents of the silicon nitride sintered body defined as 100 mass%, it is advisable that a proper amount of sodium oxide powder is weighed out for use as raw material powder, with consideration given to an increase of the mass of metallic silicon in the nitriding process.

The use of the above-mentioned sintering aids and additive makes it possible to provide higher sinterability, to obtain a densely-structured silicon nitride sintered body, and to achieve improvement in mechanical characteristics.

Next, together with a solvent, the powder mixture and additives in predetermined weighed amounts are pulverized by a heretofore known mill, for example, a barrel mill, a tumbling mill, a vibrating mill, a bead mill, a sand mill, or an agitator mill to prepare a slurry. As a medium used for this pulverization, for example, a medium made of sintered silicon nitride, a medium made of sintered zirconium oxide, or a medium made of sintered aluminum oxide may be used. In the interest of minimizing the influence of a pulverization medium which can become impurities when blended, it is desirable to use a medium made of sintered silicon nitride having the same or approximately the same composition as that of the silicon nitride sintered body to be produced.

In preparing the slurry, from the sinterability enhancement standpoint, it is desirable to perform pulverization until a particle diameter (D₉₀) of constituents is reduced to 3 µm or below. The particle diameter (D₉₀) of less than or equal to 3 µm can be attained by making proper adjustment to the outside diameter and the amount of the medium, and the time for pulverization, for example. To prepare a slurry having a particle diameter (D₉₀) of less than or equal to 3 µm in a short period of time, it is desirable to use powder having a particle diameter (D₅₀) (a particle diameter corresponding to 50 % in a cumulative volume distribution) of less than or equal to 1 µm.

Moreover, the sintering aid is pulverized separately of the powder mixture and the additive by any one of the above-mentioned heretofore known mills until the specific surface area of the sintering aid becomes 50.0 cm²/g or above. When the specific surface area of the sintering aid is greater than or equal to 50.0 cm²/g, the area of the sintering aid exposed to nitrogen gas (N₂) is increased in the nitriding process, and consequently oxynitride crystals are developed in the grain boundary phase.

The pulverized sintering aid is admixed in the slurry containing the powder mixture and the additive. Moreover, an organic binder suited for use with the adopted molding technique is properly selected from among, for example, paraffin wax, polyvinyl alcohol (PVA), and polyethylene glycol (PEG) to obtain higher moldability. The organic binder is admixed in the slurry in an amount of greater than or equal to 1 part by mass but less than or equal to 10 parts by mass based on the total mass of the powder mixture, the additive, and the sintering aids defined as 100 parts by mass. In addition, a thickening stabilizer, a dispersant, a pH adjuster, an antifoam agent, and so forth may be added.

Next, the slurry is subjected to a spray drying process in a spray-drying apparatus so as to be granulated into granules. The granules so obtained are shaped into a molded body of desired shape by means of pressure molding, CIP (Cold Isostatic Pressing) molding, or otherwise. The molded body may also be formed by means of die-cast molding, injection molding, tape molding, or otherwise. Moreover, subsequent to the molding process, the molded body may be subjected to a cutting process, a stacking process, or a joining process to obtain the desired shape.

Next, the molded body so obtained is placed in a silicon carbide-made sagger or a carbon-made sagger having a surface thereof coated with silicon nitride crystal grains, and is then degreased in nitrogen or in a vacuum, for example. A degreasing temperature is preferably set to be lower than or equal to 900°C, or more preferably set to be higher than or equal to 450°C but lower than or equal to 800°C, depending on the type of an organic binder to be added.

Next, the degreased molded body is fired in an atmosphere of nitrogen at a temperature exceeding the degreasing temperature. This firing process involves a nitriding step, and, in the nitriding step, metallic silicon undergoes nitriding reaction with nitrogen gas to yield silicon nitride. Moreover, with use of the sintering aid having a large specific surface area, in the nitriding step, oxynitride crystals including calcium, aluminum, and silicon are developed in the grain boundary phase.

It is advisable to cause the above-mentioned nitriding reaction to proceed in the following manner. In a degreased body which contains degreased metallic silicon, under the nitriding process, metallic silicon present in the surface part of the degreased body is the first to be nitrided, and subsequently metallic silicon present in the interior of the degreased body is nitrided over time. Therefore, in order to avoid inadequate nitriding in the interior of the degreased body in particular, it is desirable that after a nitriding step at low temperature (first nitriding step), a nitriding step at high temperature (second nitriding step) is performed.

More specifically, in the first nitriding step, the degreased body is retained for 15 to 50 hours at a nitrogen partial pressure of 10 to 200 kPa and at a temperature of 1000 to 1200°C to cause nitrization in 10 to 90 mass% of metallic silicon contained in the degreased body.

Then, in the second nitriding step, the degreased body is further retained for 5 to 20 hours at a temperature which is higher than the temperature set for the first nitriding step but lower than or equal to 1400°C to cause nitrization in residual metallic silicon which has not been nitrided in the first nitriding step. It is preferable that the first nitriding step and the second nitriding step are successively conducted without a break.

Following the completion of the second nitriding step, the body is fired while being retained for 6 to 14 hours at a pressure of nitrogen of higher than or equal to 50 kPa but lower than or equal to 160 kPa and at the maximum temperature of higher than or equal to 1700°C but lower than 1800°C.

Moreover, to obtain a silicon nitride sintered body which contains, in the grain boundary phase, oxynitride crystals in which the first peak appears at a diffraction angle 2θ ranging from 30.4° to 32.4° and the second peak appears at a diffraction angle 2θ ranging from 51.0° to 53.0° in an X-ray diffraction chart, it is advisable to set the condition of temperature fall from the maximum temperature to 400°C at a temperature-lowering rate of higher than or equal to 150°C but lower than or equal to 250°C per hour.

Moreover, to set the content of the oxynitride crystals, in which the first peak appears at a diffraction angle 2θ ranging from 30.4° to 32.4° and the second peak appears at a diffraction angle 2θ ranging from 51.0° to 53.0°, to fall in the range of 1 to 10 mass% based on the total mass of crystals constituting the silicon nitride sintered body defined as 100 mass%, it is advisable to set the condition of temperature fall from the maximum temperature to 400°C at a temperature-lowering rate of higher than or equal to 180°C but lower than or equal to 240°C per hour.

Moreover, to obtain a silicon nitride sintered body which contains, in the grain boundary phase, oxynitride crystals in which both of the first peak and the second peak appear at a diffraction angle 2θ ranging from 27.0° to 29.0° in an X-ray diffraction chart, it is advisable to set the condition of temperature fall from the maximum temperature to 400°C at a temperature-lowering rate of higher than or equal to 250°C but lower than or equal to 350°C per hour.

Moreover, to set the content of the oxynitride crystals, in which both of the first peak and the second peak appear at a diffraction angle 2θ ranging from 27.0° to 29.0°, to fall in the range of 1 to 10 mass% based on the total mass of crystals constituting the silicon nitride sintered body defined as 100 mass%, it is advisable to set the condition of temperature fall from the maximum temperature to 400°C at a temperature-lowering rate of higher than or equal to 260°C but lower than or equal to 320°C per hour.

Moreover, to obtain a silicon nitride sintered body in which the half-value width of the first peak is greater than or equal to 0.1° but less than or equal to 0.9°, the sintering aid is pulverized until its specific surface area falls in the range of 200.0 cm²/g or above to 500.0 cm²/g or below.

Moreover, in order to obtain a silicon nitride sintered body which includes, in the grain boundary phase, compounds which contain iron and silicon and have an equivalent circle diameter greater than or equal to 0.05 µm but less than or equal to 5 µm, and in which the number of the compounds is greater than or equal to 2.0 × 10⁴ but less than or equal to 2.0 × 10⁵ per 1 mm², ferric oxide powder is used as raw material powder. By adding the ferric oxide powder in an amount of greater than or equal to 1 mass% but less than or equal to 1.7 mass% based on the total mass of the powder mixture, the sintering aids, the additive, and the ferric oxide powder defined as 100 mass%, and making adjustment to the time for pulverization, it is possible to prepare a slurry including the pulverized ferric oxide powder having a specific surface area of greater than or equal to 0.5 m²/g but less than or equal to 50 m²/g. Granules obtained from the slurry through a spray-drying process are shaped into a molded body in a manner as above described, and the molded body is subjected to a nitriding process and a firing process successively in the order named, whereby the silicon nitride sintered body is formed.

Moreover, by performing grinding, polishing, or other working process on an as needed basis, it is possible to impart desired form and surface characteristics to the silicon nitride sintered body obtained by the aforestated manufacturing method, and thereby construct the corrosion-resistant member, the sliding member, and the member for a papermaking machine according to the present embodiment with use of the silicon nitride sintered body.

While examples of the invention will be described hereinbelow, the invention is not limited to the following examples.

### Example 1

To begin with, there were prepared metallic silicon powder and silicon nitride powder having a β-phase transition rate of 10% (or equivalently an α-phase transition rate of 90%), and, these powders have been mixed so that the mass ratio between them, expressed as: (metallic silicon powder)/(silicon nitride powder), stands at 5.4 (84.4 : 15.6) to obtain a powder mixture.

Moreover, sintering aids and additives as shown in Table 1 were prepared, and, amounts of them were weighed out to fulfill compositions in the preparation stage as shown in Table 1. Then, the powder mixture and the additive in weighed amounts were put in a barrel mill together with a medium and water, and pulverized to prepare a slurry. Likewise, the sintering aid has been pulverized by a mill until its specific surface area reached a value as shown in Table 1. The pulverized sintering aid was mixed with the slurry. The values of specific surface area shown in Table 1 are measurement values obtained in accordance with JIS R 1626-1996.

After that, PVA was admixed in the slurry in an amount of 5 parts by mass based on the total mass of the powder mixture, the sintering aid, and the additive defined as 100 parts by mass. Then, the slurry was subjected to a spray drying process in a spray-drying apparatus so as to be granulated into granules. The granules so obtained were shaped into a molded body by means of CIP molding, and the molded body was cut into a cylindrical bottomed molded product which is 173 mm in outside diameter, 150 mm in inside diameter, and 1152 mm in length.

Then, the molded product was placed in a silicon carbide-made sagger, and has been degreased while being retained for 5 hours in an atmosphere of nitrogen and at a temperature of 500°C. Subsequently, with a rise in temperature, the molded product has been nitrided while being retained for 20 hours at 1050°C and then further retained for 10 hours at 1250°C at a nitrogen partial pressure of 150 kPa, which is substantially nitrogen pressure. Moreover, with a further rise in temperature, the molded product has been fired while being retained for 10 hours at 1730°C in an atmosphere of nitrogen under atmospheric pressure. In this way, there were obtained Sample Nos. 1 through 15 in the form of a bottomed cylinder made of a silicon nitride sintered body that is 150 mm in outside diameter, 130 mm in inside diameter, and 1000 mm in length. The condition of temperature fall from 1730°C to 400°C (cooling rate) set for each sample is shown in Table 1.

Next, a test piece cut from each sample was subjected to measurement using XRD to obtain an X-ray diffraction chart. The X-ray diffraction chart has indicated that the highest peak resides in silicon nitride in each and every sample; that is, the main crystal phase of each sample is silicon nitride.

Moreover, the presence or absence of crystals of oxides including calcium, aluminum, and silicon was checked with reference to the X-ray diffraction chart. Next, the presence or absence of crystals in a grain boundary phase, which was lying between silicon nitride crystals, was checked by TEM, and, elements constituting the identified crystals were examined and the mass proportion of each element was measured by WDS incorporated in the TEM. The mass proportions of calcium, aluminum, and silicon, respectively, and the presence or absence of nitrogen is listed in Table 2.

Moreover, the locations of peaks in the crystals of oxides including calcium, aluminum, and silicon were examined with reference to the X-ray diffraction chart. In Table 2, a sample which has been found to contain crystals in which the first peak appears at a diffraction angle 2θ ranging from 30.4° to 32.4° and the second peak appears at a diffraction angle 2θ ranging from 51.0° to 53.0° is designated by the symbol "A", a sample which has been found to contain crystals in which both of the first peak and the second peak appear at a diffraction angle 2θ ranging from 27.0° to 29.0° is designated by the symbol "B", and a sample which has been found to contain crystals that differ from the former two types of crystals in respect of the first peak and the second peak is designated by the symbol "-".

Next, a test piece of a size suitable for measurement of corrosion resistance, mechanical strength, fracture toughness, and thermal conductivity cut from each sample has been immersed in a 30% solution, by mass, of sodium hydroxide at a temperature of 90°C for 100 hours. A decrease in mass per unit area in each corrosion-resistant test piece before and after the immersion is listed in Table 2. After the immersion in the above-mentioned solution, each sample has been cleaned thoroughly, and, measurement has been made of the mechanical strength, the fracture toughness, and the thermal conductivity of each sample in the following manner.

The mechanical strength was determined by four-point bending strength measurement in accordance with JIS R 1604-2008. Moreover, the fracture toughness was determined by measurement using Indentation-Fracture method (IF method) as set forth in JIS R 1607-1995.

Moreover, the thermal conductivity K (W/(m·K)) was determined by the following steps. a thermal diffusivity α of each test piece in a thickness direction thereof was measured by two-dimensional analysis based on laser-flash using a thermal constant measuring apparatus (Model TC-7000 manufactured by ADVANCE RIKO, Inc. (formerly ULVAC RIKO, Inc.)), and a specific heat capacity C of each test piece was measured by a differential scanning calorimetry (DSC) method using ultrasensitive differential scanning calorimeter (Model DSC-6200 manufactured by Seiko Instruments Inc.). In addition, a bulk density ρ (kg/m³) of each sample was measured in accordance with JIS R 1634-1998. The measurement values thus obtained were assigned to an equation given as: κ = α·C·ρ to calculate the thermal conductivity κ (W/(m·K)) of each sample in the thickness-wise direction. The result of measurement is listed in Table 2.

**Table 1**

| Sample No. | Powder mixture (mass%) | Sintering aid | | Additive | | | Specific surface area of Sintering aid (cm²/g) | Cooling rate (°C/hour) |
|---|---|---|---|---|---|---|---|---|
| | | Calcium carbonate (mass%) | Aluminum oxide (mass%) | Magnesium aluminate (mass%) | Magnesium oxide (mass%) | Sodium oxide (mass%) | | |
| 1 | 65.2 | 28.9 | 2.7 | 2.9 | - | 0.3 | 50 | 220 |
| 2 | 67.7 | 26.4 | 2.7 | 2.9 | - | 0.3 | 50 | 220 |
| 3 | 79.1 | 15 | 2.7 | 2.9 | - | 0.3 | 50 | 220 |
| 4 | 79.1 | 15 | 2.7 | 2.9 | - | 0.3 | 40 | 220 |
| 5 | 87.7 | 6.4 | 2.7 | 2.9 | - | 0.3 | 50 | 220 |
| 6 | 93.0 | 1.1 | 2.7 | 2.9 | - | 0.3 | 50 | 220 |
| 7 | 93.2 | 0.9 | 2.7 | 2.9 | - | 0.3 | 50 | 220 |
| 8 | 71.1 | 15 | 10.7 | 2.9 | - | 0.3 | 50 | 220 |
| 9 | 71.8 | 15 | 10.0 | 2.9 | - | 0.3 | 50 | 220 |
| 10 | 77.3 | 15 | 4.5 | 2.9 | - | 0.3 | 50 | 220 |
| 11 | 77.3 | 15 | 4.5 | 2.9 | - | 0.3 | 40 | 220 |
| 12 | 81.1 | 15 | 0.7 | 2.9 | - | 0.3 | 50 | 220 |
| 13 | 83.9 | 15 | 0.1 | - | 0.7 | 0.3 | 50 | 220 |
| 14 | 84.0 | 15 | - | - | 0.7 | 0.3 | 50 | 220 |
| 15 | 79.1 | 15 | 2.7 | 2.9 | - | 0.3 | 50 | 300 |

**Table 2**

| Sample No. | Mass proportion in crystals | | | Presence of Nitrogen | Identified crystals | Mass decrease per unit area (mg/cm²) | Four-point bending strength (MPa) | Fracture toughness (MPa√m) | Thermal conductivity (W/(m·K)) |
|---|---|---|---|---|---|---|---|---|---|
| | Calcium | Aluminum | Silicon | | | | | | |
| 1 | 35.0 | 6.8 | 58.2 | Present | A | 0.28 | 682 | 6.9 | 23 |
| 2 | 32.0 | 6.8 | 61.2 | Present | A | 0.28 | 770 | 6.7 | 24 |
| 3 | 13.7 | 6.8 | 79.5 | Present | A | 0.28 | 800 | 6.7 | 25 |
| 4 | 13.7 | 6.8 | 79.5 | Absent | A | 0.36 | 720 | 5.9 | 21 |
| 5 | 7.8 | 6.8 | 85.4 | Present | A | 0.28 | 790 | 6.7 | 24 |
| 6 | 1.3 | 6.8 | 91.9 | Present | A | 0.28 | 750 | 6.2 | 24 |
| 7 | 1.1 | 6.8 | 92.1 | Present | A | 0.28 | 680 | 5.7 | 21 |
| 8 | 13.7 | 26.5 | 59.8 | Present | A | 0.28 | 700 | 6.0 | 23 |
| 9 | 13.7 | 25.0 | 61.3 | Present | A | 0.28 | 800 | 6.7 | 25 |
| 10 | 13.7 | 12.9 | 73.4 | Present | A | 0.28 | 803 | 6.8 | 26 |
| 11 | 13.7 | 12.9 | 73.4 | Absent | A | 0.34 | 723 | 5.9 | 21 |
| 12 | 13.7 | 4.5 | 81.8 | Present | A | 0.28 | 782 | 6.5 | 25 |
| 13 | 13.7 | 0.1 | 86.2 | Present | A | 0.28 | 750 | 6.2 | 24 |
| 14 | 13.7 | - | 86.3 | - | - | 0.36 | 680 | 5.9 | 21 |
| 15 | 13.7 | 6.8 | 79.5 | Present | B | 0.28 | 745 | 6.4 | 24 |

As shown in Table 2, a comparison of Sample No. 3 and Sample No. 4, as well as Sample No. 10 and Sample No. 11, which are equal in composition in the preparation stage, identified crystals, and mass proportion in crystals, has indicated that Sample No. 3 and Sample No. 10 are lower than Sample No. 4 and Sample No. 11, respectively, in the degree of mass decrease per unit area after immersion in the sodium hydroxide solution, and that Sample No. 3 and Sample No. 10 are greater than Sample No. 4 and Sample No. 11, respectively, in the values of four-point bending strength and fracture toughness.

Moreover, Sample Nos. 1, 7, and 8, while containing oxynitride crystals, failed to fulfill the requirement that the calcium, the aluminum and the silicon constituting the oxynitride crystals consist of 1.3 to 32.0 mass% calcium, 0.1 to 25.0 mass% aluminum, and a balance silicon. It has thus been found that, in these samples, the values of four-point bending strength and fracture toughness, or the value of at least one of them is small. Furthermore, in Sample No. 14 which is free of crystals of oxides including calcium, aluminum, and silicon, and contains neither aluminum nor nitrogen, both of the value of four-point bending strength and the value of fracture toughness are small.

In contrast, in Sample Nos. 2, 3, 5, 6, 9, 10, 12, 13, and 15, the value of mass decrease is 0.28 mg/cm², the value of four-point bending strength is greater than or equal to 745 MPa, and the value of fracture toughness is greater than or equal to 6.2 MPa√m, and also, crystals of oxynitrides including calcium, aluminum, and silicon are present in the grain boundary phase which is lying between silicon nitride crystals, and the calcium, the aluminum and the silicon constituting the oxynitride crystals consist of 1.3 to 32.0 mass% calcium, 0.1 to 25.0 mass% aluminum, and a balance silicon. It has thus been found that these samples are less prone to corrosion in a corrosive environment and afford improved mechanical characteristics even if they are subjected to a corrosive environment. In addition, these samples are higher in thermal conductivity than Sample Nos. 1, 4, 7, 8, 11, and 14.

Moreover, a comparison of Sample No. 3 and Sample No. 15, which are equal in composition in the preparation stage and mass proportion in crystals, has indicated that Sample No. 3 is greater than Sample No. 15 in both of the value of four-point bending strength and the value of fracture toughness. It has thus been found more desirable to contain the oxynitride crystals in which the first peak appears at a diffraction angle 2θ ranging from 30.4° to 32.4° and the second peak appears at a diffraction angle 2θ ranging from 51.0° to 53.0° in an X-ray diffraction chart.

### Example 2

Sample Nos. 16 through 23 were manufactured in the same manner as that for forming Sample No. 2 of Example 1, except that the specific surface area of the sintering aid was adjusted to take on values as shown in Table 3 in the firing process. Moreover, with use of the same granules as those used for the samples, circular plate-shaped test pieces that are each 38 mm in diameter and 3 mm in thickness were formed for sliding wear testing.

Next, a test piece cut from each sample was subjected to measurement using XRD to obtain an X-ray diffraction chart. The X-ray diffraction chart has indicated that each and every sample has a content of crystals in which the first peak appears at a diffraction angle 2θ ranging from 30.4° to 32.4° and the second peak appears at a diffraction angle 2θ ranging from 51.0° to 53.0°. Then, the half-value width of the first peak in each sample was calculated. The values of half-value width are listed in Table 3.

Moreover, from the result of observation using TEM, it has been confirmed that crystals are present in the grain boundary phase which is lying between silicon nitride crystals. Furthermore, from the result of measurement using WDS incorporated in the TEM, it has been confirmed that elements constituting the identified crystals are calcium, aluminum, silicon, oxygen, and nitrogen.

Next, one main surface of each test piece for abrasion resistance testing has been ground by diamond abrasive grain until its arithmetic mean surface roughness Ra reached 0.05 µm or below preparatory to sliding wear testing. The sliding wear test has been conducted in accordance with JIS R 1691-2011 to measure the specific wear rate of the circular plate-shaped test piece.

In the sliding wear test, a SUS 440C-made ball having a diameter of 10 mm was used as a spherical test piece which is brought into sliding contact with the circular plate-shaped test piece, and, ion-exchanged water was used as lubricant fluid. Moreover, a load to be placed was set at 10 N, a sliding rate at which the circular plate-shaped test piece slides was set at 0.37 m/s, the sliding circle diameter of the test piece was set at 14 mm, and the distance slidingly travelled by the test piece was set at 2000 m. Furthermore, the thermal conductivity κ (W/(m·K)) of each test piece was measured by the same method as adopted in Example 1. In addition, in determining the rigidity of each test piece, measurement has been made of static modulus of elasticity, which is a measure of rigidity, in accordance with JIS R 1602-1995. The result of measurement is listed in Table 3.

**Table 3**

| Sample No. | Specific surface area of Sintering aid (cm²/g) | Half-value width (°) | Specific wear rate (×10⁻⁶mm³/(N·m)) | Thermal conductivity (W/(m·K)) | Static modulus of elasticity (GPa) |
|---|---|---|---|---|---|
| 16 | 600 | 0.06 | 0.83 | 26 | 280 |
| 17 | 500 | 0.1 | 0.84 | 26 | 278 |
| 18 | 400 | 0.15 | 0.85 | 26 | 278 |
| 19 | 300 | 0.23 | 0.86 | 25 | 276 |
| 20 | 200 | 0.3 | 0.87 | 25 | 276 |
| 21 | 100 | 0.9 | 0.88 | 24 | 274 |
| 22 | 50 | 1 | 0.9 | 24 | 270 |

As shown in Table 3, in Sample Nos. 17 through 21, the half-value width of the first peak is greater than or equal to 0.1° but less than or equal to 0.9°. Thus, each of these samples has proven itself a silicon nitride sintered body having high wear and abrasion resistance, high thermal conductivity, and high rigidity.

### Example 3

Next, Sample Nos. 23 through 30 were manufactured in the same manner as that for forming Sample No. 10 of Example 1, except that the condition of temperature fall from 1730°C to 400°C was adjusted to take on values as shown in Table 4 in the firing process.

From the result of measurement performed with use of XRD, TEM, and WDS incorporated in the TEM as in the case of Example 1, it has been confirmed that crystals of oxynitrides including calcium, aluminum, and silicon are present in the grain boundary phase, and the oxynitride crystals are of the type in which the first peak appears at a diffraction angle 2θ ranging from 30.4° to 32.4° and the second peak appears at a diffraction angle 2θ ranging from 51.0° to 53.0°.

Moreover, the content of the oxynitride crystals in each sample was calculated by performing quantification on the data obtained by XRD in accordance with Rietvelt analysis. The measurement values are listed in Table 4.

Then, as in the case of Example 1, each sample has been immersed in a 30% solution, by mass, of sodium hydroxide at a temperature of 90°C for 100 hours. After that, measurement has been made of the four-point bending strength and the fracture toughness of each sample. The measurement values are listed in Table 4.

**Table 4**

| Sample No. | Cooling rate (° C/hour) | Oxynitride crystal content (mass%) | Four-point bending strength (MPa) | Fracture toughness (MPa√m) |
|---|---|---|---|---|
| 23 | 250 | 0.7 | 796 | 7.2 |
| 24 | 240 | 1 | 800 | 7 |
| 25 | 230 | 2.3 | 802 | 6.9 |
| 26 | 220 | 3.5 | 803 | 6.8 |
| 27 | 210 | 5 | 805 | 6.8 |
| 28 | 200 | 6.3 | 803 | 6.7 |
| 29 | 180 | 10 | 802 | 6.5 |
| 30 | 160 | 14 | 797 | 63 |

As shown in Table 4, in Sample Nos. 24 through 29, the value of four-point bending strength is greater than or equal to 800 MPa, and the value of fracture toughness is greater than or equal to 6.5 MPa√m, and also, the content of oxynitride crystals falls in the range of 1 to 10 mass% based on the total mass of crystals constituting the silicon nitride sintered body defined as 100 mass%. It has thus been found that these samples have high mechanical strength and high fracture toughness.

### Example 4

To begin with, the powder mixture and the sintering aids used in Example 1 were prepared, and also magnesium aluminate powder and ferric oxide powder were prepared as additives, and, amounts of them were weighed out to obtain a mixture having a composition of 11.3 mass% calcium carbonate powder, 3.7 mass% aluminum oxide powder, 2.6 mass% magnesium aluminate powder, 1.4 mass% ferric oxide powder, the balance being the powder mixture. From then on, the same procedural steps as those adopted in Example 1 have been followed, except that, as the conditions to be fulfilled in a firing process subsequent to nitrization, the maximum temperature was set at 1775°C, the pressure of nitrogen was set at values as shown in Table 5, the time for retention was set at 12 hours, and the rate of temperature fall from 1775°C to 400°C was set at 225°C per hour. In this way, Sample Nos. 31 through 42 were obtained. The specific surface area of the pulverized sintering aid was 50.0 cm²/g.

Then, each sample was subjected to measurement using XRD. The result of the measurement has indicated that iron silicide, which is expressed in compositional formula form as: FeSi₂, is present in each and every sample. Next, from the result of color mapping performed with use of EPMA, it has been confirmed that silicon is present in an iron-bearing part of the grain boundary phase; that is, iron silicide exists in a dispersed state in the grain boundary phase.

Then, the number of compounds which have an equivalent circle diameter greater than or equal to 0.05 µm but less than or equal to 5 µm was determined by setting the range of analysis at an area of 10.8 × 10⁴ µm² (127 µm in transverse length and 85.3 µm in longitudinal length) under SEM of a magnification of 1000 times, capturing an image of this area by a CCD camera, and performing particle analysis using image analysis software "AZO-KUN" (trademark) manufactured by Asahi Kasei Engineering Corporation. As the conditions to be fulfilled in this process, the lightness level was set to BRIGHT, binarization was set to MANUAL, and a threshold value which is a measure of the contrast of the image was set to be 1.2 times the value of a peak in a histogram indicative of the brightness of each point (pixel) in the image. The result of analysis is listed in Table 5.

Next, thermal shock testing has been conducted. More specifically, the outer periphery part of each sample was cut away to obtain a test piece which is 3 mm in thickness, 40 mm in dimension in an axial direction, and 4 mm in dimension in a direction perpendicular to the axial direction. After having been retained at 820°C, the test piece was dropped in water at 20°C, and, after the dropping, the test piece was visually checked in respect of the presence of a crack at its surface. Moreover, with the retention temperature raised to 920°C, the same testing has been conducted. The testing result is listed in Table 5.

Next, oxidation testing has been conducted on each sample. More specifically, the sample has been exposed to an aerial atmosphere at a temperature of 900°C for 200 hours. Following the completion of air-cooling process, the surface of the sample was visually observed. A sample whose surface was discolored red is marked with "Red", whereas a sample free of surface discoloration is marked with a bar line "-".

**Table 5**

| Sample No. | Specific surface area of Ferric oxide powder (cm²/g) | Nitrogen pressure (kPa) | Number (number/mm²) | Thermal shock temperature | | Surface color tone |
|---|---|---|---|---|---|---|
| | | | | 820°C | 920°C | |
| 31 | 400 | 160 | 1.0×10⁴ | Cracked | Cracked | - |
| 32 | 500 | 152 | 2.0×10⁴ | Not cracked | Cracked | - |
| 33 | 500 | 127 | 3.2×10⁴ | Not cracked | Cracked | - |
| 34 | 8000 | 127 | 4.3×10⁴ | Not cracked | Cracked | - |
| 35 | 15000 | 127 | 5.1 ×10⁴ | Not cracked | Not cracked | - |
| 36 | 22000 | 127 | 6.3×10⁴ | Not cracked | Not cracked | - |
| 37 | 29000 | 127 | 7.1×10⁴ | Not cracked | Not cracked | - |
| 38 | 36000 | 127 | 8.2×10⁴ | Not cracked | Not cracked | - |
| 39 | 43000 | 127 | 9.2×10⁴ | Not cracked | Not cracked | - |
| 40 | 50000 | 127 | 1.0×10⁴ | Not cracked | Not cracked | - |
| 41 | 50000 | 106 | 2.0×10⁴ | Not cracked | Not cracked | - |
| 42 | 57000 | 101 | 2.8×10⁴ | Not cracked | Not cracked | Red |

As shown in Table 5, it has been found that, when the compounds which contain iron and silicon and have an equivalent circle diameter greater than or equal to 0.05 µm but less than or equal to 5 µm are present in the surface part of the silicon nitride sintered body in a number of greater than or equal to 2.0 × 10⁴ but less than or equal to 2.0 × 10⁵ per 1 mm², it is possible to attain excellent oxidation resistance, and excellent thermal shock resistance as well. It has also been found that, when the number of the compounds which contain iron and silicon and have an equivalent circle diameter of greater than or equal to 0.05 µm but less than or equal to 5 µm is greater than or equal to 5.1 × 10⁴ but less than or equal to 2.0 × 10⁵ per 1 mm², it is possible to achieve further enhancement in thermal shock resistance.

### Example 5

Next, in addition to the powder mixture and the sintering aids used in Example 1, as additives, magnesium aluminate powder, magnesium oxide powder, sodium oxide powder, and powder of each rare-earth metal oxide as shown in Table 6 were prepared, and, amounts of them were weighed out to fulfill compositions in the preparation stage as shown in Table 6. From then on, the same procedural steps as those adopted in Example 1 have been followed. In this way, Sample Nos. 43 through 58 were obtained. The specific surface area of the pulverized sintering aid was 50.0 cm²/g.

Then, from the result of measurement performed with use of XRD, TEM, and WDS incorporated in the TEM as in the case of Example 1, it has been confirmed that crystals of oxynitrides including calcium, aluminum, and silicon are present in the grain boundary phase, and the oxynitride crystals are of the type in which the first peak appears at a diffraction angle 2θ ranging from 30.4° to 32.4° and the second peak appears at a diffraction angle 2θ ranging from 51.0° to 53.0°. The mass proportion of calcium was 10.2%, the mass proportion of aluminum was 11.2%, and the mass proportion of silicon was 78.6%.

Moreover, from the result of grain boundary phase measurement using WDS incorporated in TEM, it has been confirmed that an oxide of magnesium is contained in each of the samples excluding Sample No. 53, and an oxide of sodium is contained in each of the samples excluding Sample No. 58, and that an oxide of yttrium is contained in Sample Nos. 43, 45, and 46, and an oxide of ytterbium is contained in Sample Nos. 43 and 44.

Then, the content of each of magnesium, sodium, yttrium, and ytterbium on an oxide basis based on the total mass of all the constituents of the silicon nitride sintered body defined as 100 mass% was determined by measurement using ICP emission spectrophotometer. Moreover, the total content of the rare-earth metals on an oxide basis was determined on the basis of the calculated contents of yttrium and ytterbium on an oxide basis.

Next, as in the case of Example 1, each sample has been immersed in a 30% solution, by mass, of sodium hydroxide at a temperature of 90°C for 100 hours. After that, measurement has been made of the mass decrease per unit area, the four-point bending strength, and the fracture toughness of each sample, and also the thermal conductivity κ (W/(m·K)) of each sample was calculated. The measurement values are listed in Table 7.

**Table 6**

| Sample No. | Powder mixture (mass%) | Sintering aid | | Additive | | | | |
|---|---|---|---|---|---|---|---|---|
| | | Calcium carbonate (mass%) | Aluminum oxide (mass%) | Magnesium aluminate (mass%) | Magnesium oxide (mass%) | Sodium oxide (mass%) | Yttrium oxide (mass%) | Ytterbium oxide (mass%) |
| 43 | 79.9 | 10.9 | 4.9 | 2.5 | - | 0.3 | 0.84 | 0.7 |
| 44 | 80.0 | 10.9 | 4.9 | 2.5 | - | 0.3 | - | 1.4 |
| 45 | 80.7 | 10.9 | 4.9 | 2.5 | - | 0.3 | 0.7 | - |
| 46 | 81.3 | 10.9 | 4.9 | 2.5 | - | 0.3 | 0.14 | - |
| 47 | 81.4 | 10.9 | 4.9 | 2.5 | - | 0.3 | - | - |
| 48 | 73.8 | 10.9 | 4.9 | 2.3 | 7.8 | 0.3 | - | - |
| 49 | 74.0 | 10.9 | 4.9 | 2.3 | 7.6 | 0.3 | - | - |
| 50 | 77.0 | 10.9 | 4.9 | 2.3 | 4.6 | 0.3 | - | - |
| 51 | 79.6 | 10.9 | 4.9 | 2.3 | 2.0 | 0.3 | - | - |
| 52 | 82.4 | 10.9 | 6.3 | - | 0.1 | 0.3 | - | - |
| 53 | 82.5 | 10.9 | 6.3 | - | - | 0.3 | - | - |
| 54 | 80.2 | 10.9 | 4.9 | 2.5 | - | 1.5 | - | - |
| 55 | 80.4 | 10.9 | 4.9 | 2.5 | - | 1.3 | - | - |
| 56 | 81.1 | 10.9 | 4.9 | 2.5 | - | 0.6 | - | - |
| 57 | 81.4 | 10.9 | 4.9 | 2.5 | - | 0.3 | - | - |
| 58 | 92.6 | 4.9 | 2.5 | - | - | - | - | - |

**Table 7**

| Sample No. | Content in sintered body | | | | | Mass decrease per unit area (mg/cm²) | Four-point bending strength (MPa) | Fracture toughness (MPa√m) | Thermal conductivity (W/(m·K)) |
|---|---|---|---|---|---|---|---|---|---|
| | Magnesium oxide (mass%) | Sodium oxide (mass%) | Yttrium oxide (mass%) | Ytterbium oxide (mass%) | Rare-earth metal oxides in total (mass%) | | | | |
| 43 | 0.5 | 0.2 | 0.6 | 0.5 | 1.1 | 0.28 | 798 | 7.0 | 24 |
| 44 | 0.5 | 0.2 | - | 1.0 | 1.0 | 0.28 | 815 | 6.9 | 24 |
| 45 | 0.5 | 0.2 | 0.5 | - | 0.5 | 0.28 | 812 | 6.8 | 24 |
| 46 | 0.5 | 0.2 | 0.1 | - | 0.1 | 0.28 | 800 | 6.7 | 24 |
| 47 | 0.5 | 0.2 | - | - | - | 0.28 | 750 | 6.3 | 24 |
| 48 | 6.2 | 0.2 | - | - | - | 0.28 | 795 | 6.9 | 24 |
| 49 | 6.0 | 0.2 | - | - | - | 0.28 | 810 | 6.9 | 24 |
| 50 | 3.8 | 0.2 | - | - | - | 0.28 | 813 | 6.8 | 24 |
| 51 | 1.9 | 0.2 | - | - | - | 0.28 | 811 | 6.7 | 24 |
| 52 | 0.1 | 0.2 | - | - | - | 0.28 | 803 | 6.6 | 24 |
| 53 | - | 0.2 | - | - | - | 0.28 | 743 | 6.3 | 24 |
| 54 | 0.5 | 1.2 | - | - | - | 0.24 | 758 | 6.2 | 26 |
| 55 | 0.5 | 1.0 | - | - | - | 0.24 | 763 | 6.7 | 26 |
| 56 | 0.5 | 0.5 | - | - | - | 0.26 | 768 | 6.9 | 25 |
| 57 | 0.5 | 0.2 | - | - | - | 0.28 | 764 | 6.4 | 25 |
| 58 | 0.5 | - | - | - | - | 0.29 | 758 | 6.1 | 24 |

As shown in Table 7, it has been found that the inclusion of an oxide of rare-earth metal in the grain boundary phase makes it possible to achieve improvement in mechanical characteristics, and that, particularly, when the total content of rare-earth metals on an oxide basis is greater than or equal to 0.1 mass% but less than or equal to 1.0 mass% based on the total mass of all the constituents of the silicon nitride sintered body defined as 100 mass%, then the silicon nitride sintered body affords excellent mechanical characteristics.

Moreover, it has been found that the inclusion of an oxide of magnesium in the grain boundary phase makes it possible to achieve improvement in mechanical characteristics, and that, particularly, when the content of magnesium on an oxide basis is greater than or equal to 0.1 mass% but less than or equal to 6.0 mass% based on the total mass of all the constituents of the silicon nitride sintered body defined as 100 mass%, then the silicon nitride sintered body affords excellent mechanical characteristics. In addition, it has been found desirable to use magnesium oxide powder as a source of an oxide of magnesium which is to be present in the grain boundary phase.

Moreover, it has been found that the inclusion of an oxide of magnesium in the grain boundary phase makes it possible to achieve enhancement in corrosion resistance, and that, particularly, when the content of sodium on an oxide basis is greater than or equal to 0.2 mass% but less than or equal to 1.0 mass% based on the total mass of all the constituents of the silicon nitride sintered body defined as 100 mass%, then the silicon nitride sintered body affords, not only excellent mechanical characteristics, but also excellent corrosion resistance.

## Claims

1. A silicon nitride sintered body, comprising crystals of oxynitrides including calcium, aluminum, and silicon in a grain boundary phase which is lying between silicon nitride crystals, the calcium, the aluminum and the silicon constituting the crystals of oxynitrides consisting of 1.3 to 32.0 mass% calcium, 0.1 to 25.0 mass% aluminum, and a balance silicon,
wherein the crystals of oxynitrides are of a type in which a first peak appears at a diffraction angle 2θ ranging from 30.4° to 32.4° and a second peak appears at a diffraction angle 2θ ranging from 51.0° to 53.0° in an X-ray diffraction chart,
wherein a half-value width of the first peak is greater than or equal to 0.1° but less than or equal to 0.9°, and
wherein a content of the crystals of oxynitrides falls in a range of 1 to 10 mass% based on a total mass of crystals constituting the silicon nitride sintered body defined as 100 mass%.

2. The silicon nitride sintered body according to claim 1,
wherein compounds which contain iron and silicon and have an equivalent circle diameter greater than or equal to 0.05 µm but less than or equal to 5 µm are present in the grain boundary phase, and
wherein a number of the compounds is greater than or equal to 2.0 × 10⁴ but less than or equal to 2.0 × 10⁵ per 1 mm².

3. The silicon nitride sintered body according to claim 1 or 2,
wherein one or more oxides of rare-earth metal are contained in the grain boundary phase, and
wherein a total content of the rare-earth metal on an oxide basis is greater than or equal to 0.1 mass% but less than or equal to 1.0 mass% based on a total mass of all constituents of the silicon nitride sintered body defined as 100 mass%.

4. The silicon nitride sintered body according to any one of claims 1 to 3,
wherein an oxide of magnesium is contained in the grain boundary phase, and
wherein a content of the magnesium on an oxide basis is greater than or equal to 0.1 mass% but less than or equal to 6.0 mass% based on a total mass of all constituents of the silicon nitride sintered body defined as 100 mass%.

5. The silicon nitride sintered body according to any one of claims 1 to 4,
wherein an oxide of sodium is contained in the grain boundary phase, and
wherein a content of the sodium on an oxide basis is greater than or equal to 0.2 mass% but less than or equal to 1.0 mass% based on a total mass of all constituents of the silicon nitride sintered body defined as 100 mass%.

6. A corrosion-resistant member comprising the silicon nitride sintered body according to any one of claims 1 to 5.

7. A sliding member comprising the silicon nitride sintered body according to any one of claims 1 to 5.

8. A member for a papermaking machine comprising the silicon nitride sintered body according to any one of claims 1 to 5.

9. Use of the silicon nitride sintered body according to any one of claims 1 to 5 as a corrosion-resistant member, a sliding member, or a member for a papermaking machine.

## Patentansprüche

1. Siliciumnitrid-Sinterkörper, aufweisend Kristalle von Oxynitriden einschließlich Calcium, Aluminium und Silicium in einer Korngrenzenphase, die zwischen Siliciumnitrid-Kristallen liegt, wobei das Calcium, das Aluminium und das Silicium, die die Kristalle von Oxynitriden bilden, aus 1,3 bis 32,0 Masse-% Calcium, 0,1 bis 25,0 Masse-% Aluminium und einem Rest Silicium bestehen,
wobei die Kristalle von Oxynitriden von einem Typ sind, bei dem in einem Röntgenbeugungsdiagramm ein erster Peak bei einem Beugungswinkel 2θ im Bereich von 30,4° bis 32,4° auftritt und ein zweiter Peak bei einem Beugungswinkel 2θ im Bereich von 51,0° bis 53,0° auftritt,
wobei eine Halbwertsbreite des ersten Peaks größer oder gleich 0,1°, aber kleiner oder gleich 0,9° ist, und
wobei ein Gehalt der Kristalle von Oxynitriden in einen Bereich von 1 bis 10 Masse-% fällt, basierend auf einer Gesamtmasse von Kristallen, die den Siliciumnitrid-Sinterkörper bilden, die als 100 Masse-% definiert ist.

2. Siliciumnitrid-Sinterkörper gemäß Anspruch 1,
wobei Verbindungen, die Eisen und Silicium enthalten und einen äquivalenten Kreisdurchmesser von größer oder gleich 0,05 µm, aber kleiner oder gleich 5 µm haben, in der Korngrenzenphase vorhanden sind, und
wobei eine Anzahl der Verbindungen größer oder gleich 2,0 × 10⁴, aber kleiner oder gleich 2,0 × 10⁵ pro 1 mm² ist.

3. Siliciumnitrid-Sinterkörper gemäß Anspruch 1 oder 2,
wobei ein oder mehrere Seltenerdmetalloxide in der Korngrenzenphase enthalten sind und
wobei ein Gesamtgehalt des Seltenerdmetalls auf einer Oxidbasis größer oder gleich 0,1 Masse-%, aber kleiner oder gleich 1,0 Masse-% ist, basierend auf einer Gesamtmasse aller Bestandteile des Siliciumnitrid-Sinterkörpers, die als 100 Masse-% definiert ist.

4. Siliciumnitrid-Sinterkörper gemäß irgendeinem der Ansprüche 1 bis 3,
wobei ein Magnesiumoxid in der Korngrenzenphase enthalten ist und
wobei ein Gehalt des Magnesiums auf einer Oxidbasis größer oder gleich 0,1 Masse-%, aber kleiner oder gleich 6,0 Masse-% ist, basierend auf einer Gesamtmasse aller Bestandteile des Siliciumnitrid-Sinterkörpers, die als 100 Masse-% definiert ist.

5. Siliciumnitrid-Sinterkörper gemäß irgendeinem der Ansprüche 1 bis 4,
wobei ein Natriumoxid in der Korngrenzenphase enthalten ist und
wobei ein Gehalt des Natriums auf einer Oxidbasis größer oder gleich 0,2 Masse-%, aber kleiner oder gleich 1,0 Masse-% ist, basierend auf einer Gesamtmasse aller Bestandteile des Siliciumnitrid-Sinterkörpers, die als 100 Masse-% definiert ist.

6. Korrosionsbeständiges Element, aufweisend den Siliciumnitrid-Sinterkörper gemäß irgendeinem der Ansprüche 1 bis 5.

7. Gleitelement/Schiebeelement, aufweisend den Siliciumnitrid-Sinterkörper gemäß irgendeinem der Ansprüche 1 bis 5.

8. Element für eine Papiermaschine, aufweisend den Siliciumnitrid-Sinterkörper gemäß irgendeinem der Ansprüche 1 bis 5.

9. Verwendung des Siliciumnitrid-Sinterkörpers gemäß irgendeinem der Ansprüche 1 bis 5 als korrosionsbeständiges Element, Gleitelement/Schiebeelement oder Element für eine Papiermaschine.

## Revendications

1. Corps fritté en nitrure de silicium, comprenant des cristaux d'oxynitrures comprenant du calcium, de l'aluminium et du silicium dans une phase de limite de grain qui se trouve entre des cristaux de nitrure de silicium, le calcium, l'aluminium et le silicium constituant les cristaux d'oxynitrures consistant en 1,3 à 32,0 % en masse de calcium, 0,1 à 25,0 % en masse d'aluminium, et le reste en silicium,
dans lequel les cristaux d'oxynitrures sont d'un type dans lequel un premier pic apparaît à un angle de diffraction 2θ allant de 30,4° à 32,4° et un second pic apparaît à un angle de diffraction 2θ allant de 51,0° à 53,0° dans un diagramme de diffraction des rayons X,
dans lequel une largeur de la demi-valeur du premier pic est supérieure ou égale à 0,1° mais inférieure ou égale à 0,9°, et
dans lequel une teneur des cristaux d'oxynitrures se situe dans une gamme de 1 à 10 % en masse sur la base d'une masse totale de cristaux constituant le corps fritté en nitrure de silicium définie comme 100 % en masse.

2. Corps fritté en nitrure de silicium selon la revendication 1,
dans lequel des composés qui contiennent du fer et du silicium et qui ont un diamètre de cercle équivalent supérieur ou égal à 0,05 µm mais inférieur ou égal à 5 µm sont présents dans la phase de limite de grain, et
dans lequel un nombre des composés est supérieur ou égal à 2,0 × 10⁴ mais inférieur ou égal à 2,0 × 10⁵ par 1 mm².

3. Le corps fritté en nitrure de silicium selon la revendication 1 ou 2,
dans lequel un ou plusieurs oxydes de métaux de terres rares sont contenus dans la phase de limite de grain, et
dans lequel une teneur totale du métal de terres rares sur une base d'oxyde est supérieure ou égale à 0,1 % en masse mais inférieure ou égale à 1,0 % en masse sur la base d'une masse totale de tous les constituants du corps fritté en nitrure de silicium définie comme 100 % en masse.

4. Le corps fritté en nitrure de silicium selon l'une quelconque des revendications 1 à 3,
dans lequel un oxyde de magnésium est contenu dans la phase de limite du grain, et
dans lequel une teneur en magnésium sur une base d'oxyde est supérieure ou égale à 0,1 % en masse mais inférieure ou égale à 6,0 % en masse sur la base d'une masse totale de tous les constituants du corps fritté en nitrure de silicium définie comme 100 % en masse.

5. Le corps fritté en nitrure de silicium selon l'une quelconque des revendications 1 à 4,
dans lequel un oxyde de sodium est contenu dans la phase de limite du grain, et
dans lequel une teneur en sodium sur une base d'oxyde est supérieure ou égale à 0,2 % en masse mais inférieure ou égale à 1,0 % en masse sur la base d'une masse totale de tous les constituants du corps fritté en nitrure de silicium définie comme 100 % en masse.

6. Elément résistant à la corrosion comprenant le corps fritté en nitrure de silicium selon l'une quelconque des revendications 1 à 5.

7. Elément coulissant comprenant le corps fritté en nitrure de silicium selon l'une quelconque des revendications 1 à 5.

8. Elément pour une machine à papier comprenant le corps fritté en nitrure de silicium selon l'une quelconque des revendications 1 à 5.

9. Utilisation du corps fritté en nitrure de silicium selon l'une quelconque des revendications 1 à 5 comme élément résistant à la corrosion, élément coulissant ou élément pour une machine à papier.
